# EUROPEAN PATENT APPLICATION

(11) **EP 1 548 066 A1**
(43) Date of publication of application: **29.06.2005**
(21) Application number: 03784574.0
(22) Date of filing: 07.08.2003
(51) Int. Cl.: C08L 101/00, C08K 3/22

(54) **THERMOPLASTIC RESIN COMPOSITION AND FORMED ARTICLE**

(30) Priority: 07.08.2002 JP 2002229618
(71) Applicant: TEIJIN LIMITED, Osaka-shi Osaka 541-0054 (JP)
(72) Inventor: NISHIO, Rei Teijin Ltd, Iwakuni Research Center, Iwakuni-shi, Yamaguchi 740-0014 (JP); KIDO, Nobuaki Teijin Ltd, Iwakuni Research Center, Iwakuni-shi, Yamaguchi 740-0014 (JP); MATSUMURA, S. Teijin Ltd, Iwakuni Research Center, Iwakuni-shi, Yamaguchi 740-0014 (JP)
(74) Representative: Hallybone, Huw George
(86) International application number: PCT/JP2003/010063
(87) International publication number: WO 2004/015013

(57) **Abstract**

There is provided a polyester composition which can be suitably used as a molding material for fibers, films or resins having an enhanced elastic modulus and softening points. The thermoplastic resin composition comprises 100 parts by weight of a thermoplastic resin (A) and 0.01-10 parts by weight of a fibrous aluminum oxide filler (B) composed of a compound represented by the following formula (I):

AlₓO_{y}H_{z} (I)

(where x, y and z are numbers of 0-3, and x=(2y-z)/3 is satisfied), wherein the primary particles of the fibrous aluminum oxide filler have a mean fiber length of 10-1000 nm, a mean fiber diameter of 0.5-7 nm and a mean aspect ratio of 2000-5. The fibrous aluminum oxide filler (B) is preferably surface-coated with a silane coupling agent.

## Description

### Technical Field

The present invention relates to a thermoplastic resin composition with an improved elastic modulus and softening point, obtained by dispersing a highly heat resistant, highly rigid fibrous aluminum oxide filler in a thermoplastic resin, as well as to a process for its production and to molded articles obtained therefrom.

### Background Art

Thermoplastic resins are used for a wide variety of purposes because of their superior lightweight properties and workability compared to metal materials. However, they have been less than satisfactory for some purposes in terms of synthesis and heat resistance, and it has long been attempted to better utilize the properties of thermoplastic resins to achieve improved performance.

For example, polyesters exhibit excellent physicochemical properties and are therefore widely employed for fibers, films, resins and the like. Even wider applications are expected in the future, and commensurate enhancement of their properties has been desired. In the case of applications in films, for example, including magnetic films, the properties which have been anticipated for the future include thinner film thicknesses, enhanced elastic modulus, dimensional stability at high temperatures and greater surface smoothness.

It has also been attempted to add inorganic substances having higher rigidity than polymer materials, in order to achieve improved impact resistance, elastic modulus, heat resistance and dimensional stability of the resins. Among such materials, glass fibers are widely used for resin reinforcement and for enhancement of rigidity and heat resistance. In order to maintain the moldability and surface properties of resins while guaranteeing sufficient rigidity of the inorganic material, the goal has been to homogeneously disperse fine inorganic materials as a means of increasing their affinity with the resins. Exhibiting the effects with smaller amounts is also preferable from a cost standpoint.

As an example of dispersing inorganic granules in a film, Japanese Unexamined Patent Publication No. 2001-48969 describes preparing a dispersion of fine inorganic granules having a mean particle size of 0.01-20 nm and inhibiting their aggregation during addition by controlling the pH in order to achieve homogeneous dispersion, to obtain a polyester film with excellent surface properties. Also, Japanese Unexamined Patent Publication HEI No. 8-225663 describes treating the surfaces of alumina inorganic particulate material having a mean particle size of about 0.5 µm with a silane coupling agent to improve the dispersability in polyester films. The particulate additive is used more for the purpose of improving the surface properties of product than for enhancing the properties of the resin.

For improved mechanical properties it is preferred to add a fibrous additive having a high aspect ratio and a high elastic modulus. Japanese Unexamined Patent Publication No. 2001-131409 discloses a resin composition comprising a polyamide resin and fibrous potassium titanate or fibrous calcium silicate having a fiber diameter of 0.4 µm, fiber lengths of 15-28 µm and aspect ratios of 7-10. However, because a larger fiber diameter impairs the surface properties, it has been difficult to apply this concept for purposes requiring adequate surface properties for films and the like.

### Brief Description of the Drawings

Fig. 1 shows the results of IR analysis of the filler obtained in Example 2.
Fig. 2 shows the results of TGA analysis of the filler obtained in Example 2.
Fig. 3 shows the results of ESCA analysis of the filler obtained in Example 2.

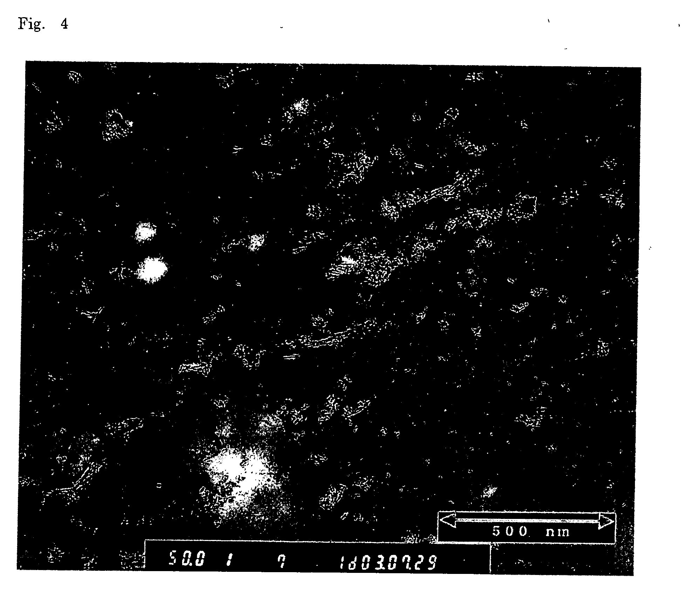

Fig. 4 is a cross-sectional TEM photograph of the γ-alumina filler-containing polyethylene terephthalate yarn obtained in Example 4.

### Disclosure of the Invention

It is a principal object of the present invention to provide a thermoplastic resin composition which can be suitably utilized as a fiber, film or resin molding material to achieve an improved elastic modulus and softening point without impaired surface properties.

The invention provides a thermoplastic resin composition comprising 100 parts by weight of a thermoplastic resin (A) and 0.01-10 parts by weight of a fibrous aluminum oxide filler (B) composed of a compound represented by the following formula (I):

AlₓO_{y}H_{z} (I)

(where x, y and z are numbers of 0-3, and x=(2y-z)/3 is satisfied),
wherein the primary particles of the fibrous aluminum oxide filler have a mean fiber length of 10-1000 nm, a mean fiber diameter of 0.5-7 nm and a mean aspect ratio of 2000-5.

More preferably, the invention provides a thermoplastic resin composition wherein the fibrous aluminum oxide filler (B) is a fibrous aluminum oxide filler which has been surface coated with a silane coupling agent.

The invention further provides a process for production of a thermoplastic resin composition, characterized by adding a fibrous aluminum oxide filler after its dispersion in a diol, at any stage of the thermoplastic resin polymerization process or during melting of the thermoplastic resin.

The invention further provides molded articles, and preferably fibers, comprising a thermoplastic resin composition obtained by any of the methods described above.

The thermoplastic resin of the invention is preferably at least one type selected from the group consisting of polyesters, polycarbonates, polyether ketones, polyethers, polyimides, polyamides and polyphenylene sulfides. Among these are preferred polyesters, polycarbonates and polyamides, because of the superior properties of the polymers themselves that can result in compositions with high rigidity and high elastic modulus.

Polyesters are products of polycondensation of dicarboxylic acids and/or their derivatives with diols, or hydroxycarboxylic acids, or copolymers thereof.

As dicarboxylic acid components for polyesters there may be mentioned aromatic dicarboxylic acids such as terephthalic acid, isophthalic acid, orthophthalic acid, 2,6-naphthalenedicarboxylic acid, 2,7-naphthalenedicarboxylic acid, 1,5-naphthalenedicarboxylic acid, 4,4'-biphenyldicarboxylic acid, 2,2'-biphenyldicarboxylic acid, 4,4'-diphenyletherdicarboxylic acid, 4,4'-diphenylmethanedicarboxylic acid, 4,4'-diphenylsulfonedicarboxylic acid, 4,4'-diphenylisopropylidenedicarboxylic acid and 5-sodiumsulfoisophthalic acid; aliphatic dicarboxylic acids such as oxalic acid, succinic acid, adipic acid, sebacic acid, dodecanedicarboxylic acid, octadecanedicarboxylic acid, maleic acid and fumaric acid; and cyclic aliphatic dicarboxylic acids such as 1,4-cyclohexanedicarboxylic acid.

As diols there may be mentioned aliphatic diols such as ethylene glycol, 1,2-propylene glycol, 1,3-propylene glycol, 1,3-butanediol, 1,4-butanediol, 2,2-dimethylpropanediol, neopentyl glycol, 1,5-pentanediol, 1,6-hexanediol, 1,8-octanediol, 1,10-decanediol, 1,4-cyclohexanedimethanol, 1,3-cyclohexanedimethanol, 1,2-cyclohexanedimethanol, trimethylene glycol, tetramethylene glycol, pentamethylene glycol, octamethylene glycol, diethylene glycol and dipropylene glycol, or diphenols such as hydroquinone, resorcinol, bisphenol A and 2,2-bis(2'-hydroxyethoxyphenyl)propane.

As hydroxycarboxylic acids there may be mentioned aromatic hydroxycarboxylic acids such as p-hydroxybenzoic acid, p-(hydroxyethoxy)benzoic acid, 6-hydroxy-2-naphthoic acid, 7-hydroxy-2-naphthoic acid and 4'-hydroxy-biphenyl-4-carboxylic acid, and aliphatic hydroxycarboxylic acids such as glycolic acid, lactic acid, 1,4-hydroxybutanoic acid and 1,6-hydroxyhexanoic acid.

As specific preferred polyesters there may be mentioned polyethylene terephthalate (PET), polybutylene terephthalate, polycyclohexylenedimethylene terephthalate, polyethylene-2,6-naphthalate, polybutylene naphthalate, polyethyleneisophthalate-terephthalate copolymer and p-hydroxybenzoic acid-6-hydroxy-2-naphthoic acid copolymer.

Polyesters according to the invention are homopolymers or copolymers obtained by reacting one or more than one each of the aforementioned aromatic dicarboxylic acids and diols. The use of crystalline polyesters is preferred from the standpoint of mechanical properties and heat resistance. Polyethylene terephthalate, polybutylene terephthalate, polyethylene naphthalate and polybutylene naphthalate are particularly preferred from the standpoint of mechanical properties and heat resistance.

Polyamides include polycondensation products of dicarboxylic acids and/or their derivatives with diamines, or aminocarboxylic acids, or copolymers thereof. As carboxylic acids for polyamides there may be mentioned aliphatic dicarboxylic acids such as adipic acid, sebacic acid, dodecanedicarboxylic acid and octadecanedicarboxylic acid, cyclic aliphatic dicarboxylic acids such as 1,4-cyclohexanedicarboxylic acid, and aromatic dicarboxylic acids such as terephthalic acid, isophthalic acid, orthophthalic acid, 2,6-naphthalenedicarboxylic acid, 2,7-naphthalenedicarboxylic acid, 1,5-naphthalenedicarboxylic acid, 4,4'-biphenyldicarboxylic acid, 2,2'-biphenyldicarboxylic acid, 4,4'-diphenyletherdicarboxylic acid, 4,4'-diphenylmethanedicarboxylic acid and 4,4'-diphenylsulfonedicarboxylic acid. As diamines there may be mentioned aliphatic diamines such as butanediamine, pentanediamine, hexanediamine, heptanediamine, nonanediamine, and dodecanediamine, substituted aliphatic diamines such as trimethyl-1,6-hexanediamine, and aromatic diamines such as m-phenylenediamine, p-phenylenediamine, 1,4-diaminonaphthalene, 1,5-diaminonaphthalene, 1,8-diaminonaphthalene, 2,6-diaminonaphthalene, 2,7-diaminonaphthalene, 3,3'-diaminobiphenyl, 4,4'-diaminobiphenyl, 4,4'-diaminobenzophenone, 3,3'-diaminodiphenylether, 3,4'-diaminodiphenylether, 4,4'-diaminodiphenylether, 3,3'-diaminodiphenylmethane, 4,4'-diaminodiphenylmethane, 3,3'-diaminodiphenylsulfone, 4,4'-diaminodiphenylsulfone, 3,3'-diaminodiphenylsulfide, 4,4'-diaminodiphenylsulfide, 4,4'-diaminodiphenylthioether, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 1,1-bis(4-aminophenyl)ethane and 2,2-bis(4-aminophenyl)propane. These may be used alone or in combinations of more than one. As aminocarboxylic acids there may be mentioned aliphatic aminocarboxylic acids such as 6-aminohexanoic acid and 12-aminododecanoic acid, or aromatic aminocarboxylic acids such as p-aminobenzoic acid, 6-amino-2-naphthoic acid and 7-amino-2-naphthoic acid.

Specific examples of preferred polyamides include aliphatic polyamides such as nylon 6,6, nylon 6 and nylon 12, semi-aromatic polyamides such as polyhexamethylene terephthalamide and polyhexamethylene isophthalamide, and copolymers thereof.

Aromatic polycarbonates have carbonic acid esters of aromatic bisphenols as repeating units. As examples of aromatic bisphenols there may be mentioned dihydroxybenzenes, dihydroxybiphenyl, dihydroxydiphenyl ether, dihydroxydiphenyl sulfide, dihydroxydiphenylsulfone, bis(4-hydroxyphenyl)methane (bisphenol F), 1,1-bis(4-hydroxyphenyl)ethane (bisphenol E), 2,2-bis(4-hydroxyphenyl)propane (bisphenol A), 2,2-bis(4-hydroxy-3-methylphenyl)propane (bisphenol C), 1,1-bis(4-hydroxyphenyl)cyclohexane (bisphenol Z), 3,3,5-trimethyl-1,1-bis(4-hydroxyphenyl)cyclohexane, α,α'-bis(4-hydroxyphenyl)diisopropylbenzene (bisphenol M), 9,9-bis(4-hydroxyphenyl)fluorene, 9,9-bis{(4-hydroxy-3-methyl)phenyl}fluorene, 1,3-bis(4-hydroxyphenyl)-5,7-dimethyladamantane, 2,2-bis(4-hydroxyphenyl)adamantane, 1,3-bis(4-hydroxyphenyl)-p-methane (YP-90), 2,8-bis(4-hydroxyphenyl)-p-methane, 1,8-bis(4-hydroxyphenyl)-p-methane, and mixtures of these bisphenols. Among these, bisphenol A, bisphenol Z, bisphenol M, 3,3,5-trimethyl-1,1-bis(4-hydroxyphenyl)cyclohexane, 9,9-bis{(4-hydroxy-3-methyl)phenyl}fluorene and YP-90 are preferred, with bisphenol A being particularly preferred.

Aromatic polycarbonates are obtained by polymerization or copolymerization from the aforementioned bisphenols, and any polymerization process may be employed. Common processes, though not limitative, include interfacial polymerization using phosgene, and melt polymerization using diphenyl carbonate.

As polyethers there may be mentioned polyoxymethylene, polyethylene oxide, polyoxacyclobutane, polytetrahydrofuran and the like, with no limitation to these.

Polyimides are polycondensation products of tetracarboxylic acids and/or their derivatives with diamines, or aminodicarboxylic acids, or copolymers thereof. As tetracarboxylic acid components for polyimides there may be mentioned pyromellitic acid, 1,2,3,4-benzenetetracarboxylic acid, 2,2',3,3'-benzophenonetetracarboxylic acid, 2,3',3,4'-benzophenonetetracarboxylic acid, 3,3',4,4'-benzophenonetetracarboxylic acid, 3,3',4,4'-biphenyltetracarboxylic acid, 2,2',3,3'-biphenyltetracarboxylic acid, 2,3,3',4'-biphenyltetracarboxylic acid, 1,2,4,5-naphthalenetetracarboxylic acid, 1,2,5,6-naphthalenetetracarboxylic acid, 1,2,6,7-naphthalenetetracarboxylic acid, 1,4,5,8-naphthalenetetracarboxylic acid, 2,3,6,7-naphthalenetetracarboxylic acid, 3,4,9,10-perylenetetracarboxylic acid, bis(2,3-dicarboxyphenyl)ether, bis(3,4-dicarboxyphenyl)ether, bis(2,3-dicarboxyphenyl)methane, bis(3,4-dicarboxyphenyl)methane, bis(2,3-dicarboxyphenyl)sulfone, bis(3,4-dicarboxyphenyl)sulfone, 1,1-bis(2,3-dicarboxyphenyl)ethane, 1,1-bis(3,4-dicarboxyphenyl)ethane, 2,2-bis(2,3-dicarboxyphenyl)propane, 2,2-bis(3,4-dicarboxyphenyl)propane, 1,1,1,3,3,3-hexafluoro-2,2-bis(3,4-dicarboxyphenyl)propane dianhydride, bis(3,4-dicarboxyphenyl)dimethylsilane dianhydride, and the like. As diamines there may be mentioned aliphatic diamines such as butanediamine, pentanediamine, hexanediamine, heptanediamine, nonanediamine and dodecanediamine, and substituted aliphatic diamines such as isophoronediamine and trimethyl-1,6-hexanediamine. These may be used alone or in combinations of more than one. As aminodicarboxylic acids there may be mentioned aliphatic aminocarboxylic acids such as 6-aminohexanoic acid and 12-aminododecanoic acid.

Examples of preferred polyimides include dodecamethylenepyromellitic imide and undecamethylenepyromellitic imide. Examples of preferred commercially available products include ULTEM™ (polyetherimide), and the like.

Polyphenylene sulfides are obtained by polymerization of aromatic rings by sulfide bonding, and examples include branched or straight chain polyphenylene sulfides and their copolymers. Specifically there may be mentioned paraphenylene sulfide, metaphenylene sulfide and their polymers, or copolymers of these with compounds having copolymerizable ether units, sulfone units, biphenyl units, naphthyl units, substituted phenylsulfide units, trifunctional phenylsulfide units and the like in the molecules. Paraphenylene sulfide is preferred among these.

Aromatic polyether ketones used for the invention are thermoplastic resins having repeating units of phenyl groups bonded with ether groups and ketone groups. As examples there may be mentioned polyetherether ketone, polyether ketone, polyether ketone-ether-ketone-ketone, and the like. These may be used alone or in combinations of two or more.

There are no particular restrictions on the viscosity of the polymer, and it may be in a range suitable for the subsequent molding. In the case of a polyester, for example, the reduced viscosity is preferably 0.3-1.5, as measured at 35°C with a polymer concentration of 1.2 g/100 ml in phenol:tetrachloroethane at a volume ratio of 6:4.

These thermoplastic resins may be used alone or as blended products of two or more.

The fibrous aluminum oxide filler used for the invention is a compound represented by the following formula (I):

AlₓO_{y}H_{z} (I)

(where x, y and z are numbers of 0-3, and x=(2y-z)/3 is satisfied. In the case of γ-alumina, for example, x=2, y=3, z=0),
either alone or as a mixture of two different types.

Specifically, there may be mentioned aluminum hydroxide, boehmite (A100H), and δ-, γ-, θ- and α-aluminum oxides. Among these, boehmite and γ-alumina are preferred from the standpoint of acquiring fine fibrous aluminum oxide. γ-Alumina is particularly preferred, and for example, γ-alumina may be obtained from a mixture of boehmite, aluminum hydroxide and γ-alumina by conversion to the γ-form by a publicly known method such as heating.

As the size of the fibrous aluminum oxide filler used for the invention, the primary particles have a mean fiber length of 10-1000 nm, a mean fiber diameter of 0.5-7 nm and a mean aspect ratio of 2000-5.

With a mean fiber length of 10-1000 nm for the primary particles, it will be possible to adequately exhibit a reinforcing effect and maintain satisfactory melt moldability and dispersability in the polymer. The mean fiber length is preferably 30-300 nm, more preferably 35-250 nm and even more preferably 40-200 nm.

A mean fiber diameter of 0.5-7 nm will maintain adequate strength and especially satisfactory surface properties when molded into a film or the like. The mean fiber diameter is preferably 1-4 nm and more preferably 2-3 nm.

A mean aspect ratio of 2000-5 will exhibit an effect contributing to the intended high elastic modulus, while also maintaining melt moldability. The mean aspect ratio is preferably 600-5, more preferably 400-10 and even more preferably 100-20.

The process for production of the thermoplastic resin composition of the invention is preferably a process of dispersing a fibrous aluminum oxide filler in a solvent to prepare a dispersion of the fibrous aluminum oxide filler, and then adding it at any stage of the thermoplastic resin polymerization process or during melting of the thermoplastic resin. The production process for the dispersion of the fibrous aluminum oxide filler is a process of preparing a dispersion of the fibrous aluminum oxide filler in a solvent by physical dispersion using, for example, a ball mill, medium stirring mill, homogenizer, media-less disperser, thin-film revolving high-speed mixer or the like, or ultrasonic treatment, etc. The concentration of the dispersion is preferably 0.05-90 wt%. A concentration of less than 0.05 wt% is not preferred because the amount of diol is greater and its subsequent removal becomes more difficult. A concentration of greater than 90 parts by weight is not preferred because the fibrous aluminum oxide filler will not adequately disperse in the final thermoplastic resin composition. The range is more preferably 0.1-70 wt% and even more preferably 1-50 wt%.

According to the invention, surface coating treatment may also be carried out in order to improve the dispersability of the fibrous aluminum oxide filler in the thermoplastic resin. In the case of surface coating, fibrous alumina filler in the γ crystalline form and boehmite, having hydroxyl groups on the surface, are preferred.

The surface coating method is not particularly restricted so long as it accomplishes surface reaction, but a method of treatment with a silane coupling agent is preferably employed.

As preferred silane coupling agents to be used for this purpose there may be mentioned compounds represented by the following formula (II):

(R¹)ₙ-Si-X₍₄₋ₙ₎ (II)

(wherein R¹ is a C1-60 aliphatic or C1-60 aromatic hydrocarbon, n is 1-3 and X is a halogen or C1-6 alkoxy).

R¹ is a C1-60 aliphatic or C1-60 aromatic hydrocarbon, which may also include nitrogen, oxygen, sulfur or halogen-containing groups, such as amino, carboxyl, nitro, halogen, epoxy, sulfide, cyano or the like.

As specific examples of compounds for the silane coupling agent represented by formula (II) there may be mentioned silane coupling agents such as methyltrimethoxysilane, methyltriethoxysilane, n-propyltrimethoxysilane, n-propyltriethoxysilane, n-butyltrimethoxysilane, n-butyltriethoxysilane, n-pentyltrimethoxysilane, n-pentyltriethoxysilane, n-hexyltrimethoxysilane, n-hexyltriethoxysilane, phenyltrimethoxysilane, phenyltriethoxysilane, naphthyltrimethoxysilane, toluyltrimethoxysilane, toluyltriethoxysilane, 3-aminopropyltrimethoxysilane, 3-aminopropyldimethylmethoxysilane, 3-aminopropylmethyldimethoxysilane, 3-aminopropyltriethoxysilane, 3-aminopropyldimethylethoxysilane, 3-aminopropylmethyldiethoxysilane, p-aminophenyltrimethoxysilane, p-aminophenyltriethoxysilane, 3-cyanoethylmethyldimethoxysilane, 3-cyanoethyltrimethoxysilane, 3-cyanomethyltrimethoxysilane, 3-cyanopropyltrimethoxysilane, 3-cyanopropyltriethoxysilane, 3-(triethoxysilyl)propylsuccinic anhydride, 2-(3,4,-epoxycyclohexyl)ethyltriethoxysilane, 2,3,4-epoxycyclohexyl)ethyltrimethoxysilane, 5, 6-epoxyhexyltriethoxysilane, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltrimethoxysilane, 2-chloroethyltriethoxysilane, 3-triethoxysilylpropylmethacrylate monosulfide, 3-trimethoxysilylpropylmethacrylate monosulfide, 3-mercaptopropyldimethoxymethylsilane, 3-nitropropyldimethoxymethylsilane, 3-chloropropyldimethoxymethylsilane, and the like.

These may be used alone or in combinations of two or more. Among these, propyltrimethoxysilane, propyltriethoxysilane, phenyltrimethoxysilane, phenyltriethoxysilane, 3-aminopropyltrimethoxysilane, 3-aminopropyltriethoxysilane, p-aminophenyltrimethoxysilane and 2,3,(4-epoxycyclohexyl)ethyltrimethoxysilane are preferred in terms of the physical properties of the obtained filler and subsequent functional group conversion, as well as availability.

The surface coating is accomplished by, if necessary, heating the silane coupling agent and fibrous aluminum oxide filler in a solvent, or without a solvent. When water is contained in the solvent system, the silane coupling agent undergoes autocondensation reaction without reaction with the fibrous aluminum oxide filler surface, often leading to insufficient surface coating. The moisture also tends to adsorb onto the fibrous aluminum oxide filler surface, with adsorption of approximately 6% of the moisture weight under steady state conditions. The reaction is therefore preferably conducted in an adequately dried state. The method of drying is not particularly restricted, and heated reduced-pressure drying and azeotropic drying may be employed. In the case of azeotropic drying, it may be carried out in the reaction solvent with the silane coupling agent in order to accomplish reaction with the silane coupling agent without prior isolation, and this method is preferred to minimize inclusion of moisture.

The heating temperature for reaction with the silane coupling agent is not particularly restricted, and may be a temperature such as 0-300°C at which the silane coupling agent exhibits its effect without reduced reactivity. The solvent used may be any one which substantially does not inhibit reaction between the silane coupling agent and the fibrous aluminum oxide filler. For example, there may be mentioned aliphatic hydrocarbon-based solvents such as hexane, aromatic hydrocarbon-based solvents such as toluene and tetralin, alcohol-based solvents such as n-butanol and ethylene glycol, and ether-based solvents such as tetrahydrofuran and dioxane, but good solvents for the silane coupling agent are preferred.

The amount of the silane coupling agent added with respect to the fibrous aluminum oxide filler is not particularly restricted, and it may be an amount sufficient to adequately cover the fibrous aluminum oxide filler and improve compatibility with the thermoplastic resin. Thus, an amount of 0.05-30 parts by weight with respect to 1 part by weight of the fibrous aluminum oxide filler is preferred to allow coverage of the surface and avoid residue of a large amount of unreacted silane coupling agent in the reaction system.

The coating condition may be evaluated by elemental analysis of the surface of the surface-coated fibrous aluminum oxide filler surface obtained in this manner. The Si and Al abundance ratio (Si/Al) of the fibrous aluminum oxide filler (B) after surface treatment with the silane coupling agent is preferably 0.001-1.00, in terms of the surface element proportion according to ESCA measurement with MgKa rays with photoelectron take-off angle = 15°. With a ratio of 0.001 or above the dispersability in thermoplastic resins is satisfactory, and a ratio of no greater than 1.00 is preferred from the standpoint of the filler surface and avoiding unreacted silane coupling agent. The ratio is more preferably 0.01-0.95 and more preferably 0.05-0.50.

The reactive groups such as terminal amino groups of the silane coupling agent may also be utilized to introduce additional coating groups. Examples of coating groups include non-reactive groups such as amide and imide groups and reactive groups such as isocyanate groups, but it is preferred to use imide groups which have good compatibility with thermoplastic resins, and especially polyesters and polycarbonates.

When the coating groups are imide groups, this may be achieved by reaction with a silane coupling agent having terminal imide groups, or by reaction between a fibrous aluminum oxide filler surface-coated with a silane coupling agent having terminal amino groups and a dicarboxylic acid component. If the imide groups are introduced by reacting a fibrous aluminum oxide filler surface-coated with a silane coupling agent having terminal amino groups and a dicarboxylic acid component, the dicarboxylic acid components which may be used include, but are not limited to, phthalic anhydride and its derivatives, hexahydrophthalic anhydride and its derivatives, succinic anhydride and its derivatives, and the like.

When the fibrous aluminum oxide filler is subjected to surface coating reaction, it may be accomplished by a method of 1) preparation of a dispersion after coating, 2) coating after preparation of a dispersion, or 3) simultaneous coating and preparation of a dispersion. Any method may be employed so long as the dispersion is satisfactory. When imide groups are used as the coating groups, the above-mentioned method is preferably used for coating with a silane coupling agent with terminal amino groups, followed by imidation with a dicarboxylic acid.
1) For preparation of a dispersion after coating, the fibrous aluminum oxide filler is coated by the method described above and then a dispersion thereof is prepared in a solvent by physical dispersion using, for example, a ball mill, media stirring mill, homogenizer, media-less disperser, thin-film revolving high-speed mixer or the like, or by ultrasonic treatment, etc. The concentration of the dispersion is preferably 0.05-90 wt%. A concentration of less than 0.05 wt% is not preferred because the amount of diol is greater and its subsequent removal becomes more difficult. A concentration of greater than 90 parts by weight is not preferred because the fibrous aluminum oxide filler will not adequately disperse in the final thermoplastic resin composition. The range is more preferably 0.1-70 wt% and even more preferably 1-50 wt%.
2) For coating after preparation of a dispersion, a dispersion of the fibrous aluminum oxide filler is prepared in a solvent by physical dispersion using, for example, a ball mill of zirconia beads or the like, a media stirring mill, homogenizer, media-less disperser, thin-film revolving high-speed mixer or the like, or by ultrasonic treatment, etc. The concentration of the dispersion is preferably 0.05-90 wt%. A concentration of less than 0.05 wt% is not preferred because the amount of diol is greater and its subsequent removal becomes more difficult. A concentration of greater than 90 parts by weight is not preferred because the fibrous aluminum oxide filler will not adequately disperse in the final thermoplastic resin composition. The range is more preferably 0.1-70 wt% and even more preferably 1-50 wt%. Coating in this state using the method described above will yield the intended fibrous aluminum oxide filler dispersion.
3) For simultaneous coating and preparation of a dispersion, the fibrous aluminum oxide filler and silane coupling agent are added and a dispersion thereof is prepared in a solvent by physical dispersion using, for example, a ball mill, media stirring mill, homogenizer, media-less disperser, thin-film revolving high-speed mixer or the like, or by ultrasonic treatment, etc., while coating. The concentration of the dispersion is preferably 0.05-90 wt%. A concentration of less than 0.05 wt% is not preferred because the amount of diol is greater and its subsequent removal becomes more difficult. A concentration of greater than 90 parts by weight is not preferred because the fibrous aluminum oxide filler will not adequately disperse in the final thermoplastic resin composition. The range is more preferably 0.1-70 wt% and even more preferably 1-50 wt%.

The thermoplastic resin composition of the invention comprises 0.01-10 parts by weight of a fibrous aluminum oxide filler with respect to 100 parts by weight of a thermoplastic resin. A fibrous aluminum oxide filler content within 0.01-10 parts by weight will adequately exhibit the intended effect of improving the heat resistance and mechanical properties, while also maintaining melt moldability.

The fibrous aluminum oxide filler content is preferably 0.5-8 parts by weight, more preferably 1-7 parts by weight and more preferably 1.5-6 parts by weight.

The process for producing a thermoplastic resin composition according to the invention is not particularly restricted so long as it accomplishes satisfactory dispersion of the fibrous aluminum oxide filler in the thermoplastic resin, and the fibrous aluminum oxide filler may be added to the thermoplastic resin after its dispersion in a solvent, at any stage of the thermoplastic resin polymerization process or during production of the thermoplastic resin, or in a molten state after polymerization. If the thermoplastic resin is melt polymerizable, in the case of a polyester, for example, the fibrous aluminum oxide filler may be dispersed in a diol and then added during the transesterification or polymerization for production of the polyester resin, or during melting of the polyester, for dispersion in the polyester. In the case of polyethers, polyimides and polyphenylene sulfides, for example, addition to the thermoplastic resin in a molten state after polymerization is preferred.

For stabilization of the filler dispersion, a C1-20 carboxylic acid may also be included. A preferred formulation is 100 parts by weight of water or the organic solvent, 0.01-50 parts by weight of the fibrous aluminum oxide filler and 0.001-100 parts by weight of the C1-20 carboxylic acid. A carboxylic acid is represented by the following formula (III):

R²-COOH (III)

(wherein R² is a C1-19 alkyl, alicyclic alkyl or aromatic group). As preferred carboxylic acids there may be mentioned aliphatic carboxylic acids such as acetic acid and propionic acid, alicyclic carboxylic acids such as cyclohexanecarboxylic acid, and aromatic carboxylic acids such as benzoic acid and naphthalenecarboxylic acid.

A preferred embodiment of the invention will now be explained using polyester as an example.

The process for production of a polyester according to the invention produces a polyester by reacting a dicarboxylic acid composed mainly of an aromatic dicarboxylic acid, or its ester-forming derivative, with an aliphatic carboxylic acid glycol. This reaction is publicly known to those skilled in the art, and generally it involves heated reaction of a dicarboxylic acid and glycol either at ordinary pressure or under pressurization for esterification, or heated reaction of a dicarboxylic acid ester-forming derivative and glycol either at ordinary pressure or under pressurization for transesterification, followed by overheating reaction of the reaction product under reduced pressure (in a vacuum) for polycondensation reaction.

The polyester composition of the invention may be produced by adding the fibrous aluminum oxide filler at any desired stage of the polyester polymerization process, and preferably by adding the surface-coated fibrous aluminum oxide filler as a dispersion with a diol. The dispersing solvent may also be used with the polymerized polyester in a molten state, to prepare a molten mixture. Each of these production processes will now be explained in detail.

### 1) Addition during transesterification reaction

When the filler is added to the polyester during transesterification, the addition is preferably accomplished as a dispersion of the fibrous aluminum oxide filler in a solvent. The solvent used here is preferably the diol of the polyester to be produced, from the standpoint of production efficiency. There are no particular restrictions on the method of preparing the dispersion, and there may be mentioned physical dispersion using, for example, a ball mill, media stirring mill, homogenizer, media-less disperser, thin-film revolving high-speed mixer or the like, or ultrasonic treatment, etc. The concentration of the dispersion is preferably 0.05-90 wt%. A concentration of less than 0.05 wt% is not preferred because the amount of diol is greater and its subsequent removal becomes more difficult, while a concentration of greater than 90 parts by weight is not preferred because the fibrous aluminum oxide filler will not adequately disperse in the final thermoplastic resin composition. The range is more preferably 0.1-70 wt% and even more preferably 1-50 wt%. The reaction thereafter may be carried out in the same manner as an ordinary polyester polymerization reaction.

Even when the polyester polymerization is carried out by direct esterification, the fibrous aluminum oxide filler is preferably added as a dispersion in the same manner as when the addition is during transesterification.

### 2) Addition during polymerization

When the filler is added to the polyester during polymerization, the addition is preferably accomplished as a dispersion of the fibrous aluminum oxide filler in a solvent. The solvent used here is preferably a diol, and especially the diol of the polyester to be produced, from the standpoint of production efficiency.

By addition of a fibrous aluminum oxide filler dispersion obtained by the method described above during polycondensation reaction by overheating reaction of the glycol ester or its oligomer under reduced pressure (in a vacuum), it is possible to obtain a polyester composition comprising the fibrous aluminum oxide filler.

### 3) Addition by melt mixing

When the filler is added during melting of the polyester, the fibrous aluminum oxide filler is preferably added as a dispersion in a diol or in a solvent such as water, an aromatic hydrocarbon-based solvent, a halogenated aromatic hydrocarbon-based solvent or the like. The diol used in this case is most preferably the diol of the polyester to be produced, from the standpoint of production efficiency. When an aromatic hydrocarbon-based solvent is used, tetralin/toluene or the like is preferred.

There are no particular restrictions on the method of preparing the dispersion, and there may be mentioned physical dispersion using, for example, a ball mill, media stirring mill, homogenizer, media-less disperser, thin-film revolving high-speed mixer or the like, or ultrasonic treatment, etc. The concentration of the dispersion is preferably 0.05-90 wt%. A concentration of 0.05-90 wt% is preferred to allow adequate dispersion of the fibrous aluminum oxide filler, as well as to simplify the procedure. The range is more preferably 0.1-70 wt% and even more preferably 1-50 wt%.

The fibrous aluminum oxide filler dispersion obtained in this manner is added to the polyester in a molten state. A commonly employed method may be used for the addition. For example, the polyester is melted in an extruder such as a single-screw extruder or twin-screw extruder, or a kneader such as a Banbury mixer, pressure kneader or twin-roll kneader, and the fibrous aluminum oxide filler dispersion is added thereto. After the addition, the mixture may be treated under reduced pressure to easily remove the solvent.

The polyester containing the fibrous aluminum oxide filler at a relatively high concentration of 1-20 wt%, obtained by the method described above, may be used as the master batch and further kneaded in a polyester free of the fibrous aluminum oxide filler to obtain the target polyester composition.

### (Molded articles)

Molded articles with excellent heat resistance and superior elastic modulus can be obtained from a thermoplastic resin composition obtained in the manner described above. As molded articles there may be mentioned fibers and sheet-like forms, among which fibers are preferred.

The obtained molded articles have improved orientation, elastic modulus, impact resistance, dimensional stability and softening point, and may be suitably used for a wide range of various purposes including sports goods, special clothing, electronic parts, packaging materials and construction materials. Because of their high dimensional stability at high temperatures and surface smoothness, they may also be suitably used as recording materials.

### (Fiber spinning method)

The fiber spinning method is not particularly restricted, and spinning may be carried out under suitable conditions depending on the viscosity of the obtained composition. For example, the spinning method for a polyester composition is preferably melt spinning in a range of 180-350°C and more preferably 270-300°C, and the speed for melt spinning is preferably 400-5000 m/min. A spinning speed in this range will result in adequate strength of the obtained fiber while allowing stable take-up. Stretching may be accomplished either after take-up of the polyester fiber, or it may be continuous stretching without take-up, to obtained stretched fiber.

There are no particular restrictions on the shape of the spinneret used for spinning to produce fiber according to the invention, and it may be circular, irregular, solid, hollow or the like.

### Examples

The process of the invention will now be explained in more detail through the following examples, with the understanding that the scope of the invention is in no way limited by the examples.

The softening point was measured using an H-800 Thermomechanical Analyzer by Hitachi Laboratories, at a temperature elevating rate of 5°C/min. The load was 0.01 N and the thickness of the test strip was 2.5 mm.

The glass transition temperature (Tg), melting point and crystallization temperature were measured using a DSC by TA Instruments, at a temperature elevating rate of 20°C/min. The chemical structure of the obtained filler was determined using an IR analyzer by Nicolet Japan, for a KBr disk sample. The heat degradation in air was measured using a TGA by Rigaku, at a temperature elevating rate of 10°C/min. The surface element analysis was conducted using an ESCALAB200 by VG Co. (England), with MgKa rays and a photoelectron take-off angle of 15°. The reduced viscosity of the polyester was measured at 35°C with a polymer concentration of 1.2 g/100 ml in phenol:tetrachloroethane at a volume ratio of 6:4.

The fibrous aluminum oxide filler used was a fibrous aluminum oxide filler by Algonite Co. (mixture of boehmite, aluminum hydroxide and γ-alumina), heat treated at 500°C for conversion to γ-alumina (hereinafter referred to as "γ-alumina filler"). (fiber length: 40-200 nm, diameter: 2-5 nm, aspect ratio: 8-100, weight-to-area ratio: 180-500 g/m²)

The crystal system of the aluminum oxide filler was evaluated by X-ray diffraction using a Model RAD-B (CuKα rays) by Rigaku.

### Example 1

After adding 150 ml of ethylene glycol, 23 g of zirconia beads with a diameter of 1 mm and 1.5 g of the above-mentioned γ-alumina filler into a ball mill, the mixture was dispersed for 6 hours to obtain a 1 wt% filler-containing ethylene glycol dispersion.

Next, 201 g of dimethyl 2,6-naphthalenedicarboxylate and 113 g of ethylene glycol were reacted while gradually heating from 150°C to 240°C using 0.073 g of calcium acetate as a transesterification reaction catalyst, for transesterification, after which 0.058 g of trimethyl phosphate was added to inactivate the transesterification catalyst.

To 39 g of the diethylene glycol ester of naphthalenedicarboxylic acid obtained in this manner, there were added 30 g of the aforementioned filler-containing ethylene glycol dispersion and 0.01 g of antimony oxide. This was followed by heating to 290°C and polycondensation reaction under a high vacuum of no greater than 1 mmHg to obtain a polyethylene naphthalate composition with a reduced viscosity of 0.64 (dL/g).

The obtained composition was amorphous, with a Tg of 113.24°C, a crystallization temperature peak of 192.9°C, a melting point after crystallization of 267°C and a softening point of 126.6°C.

### Example 2

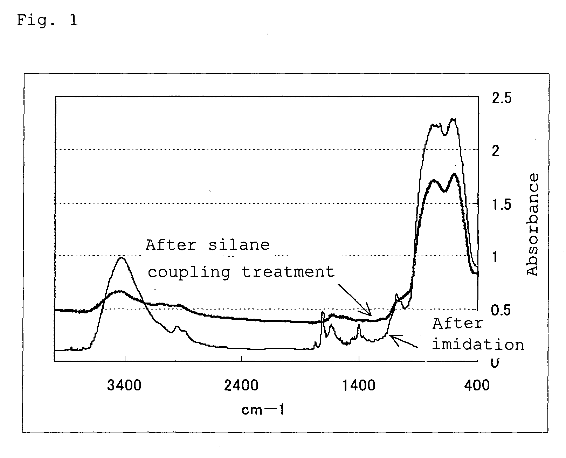

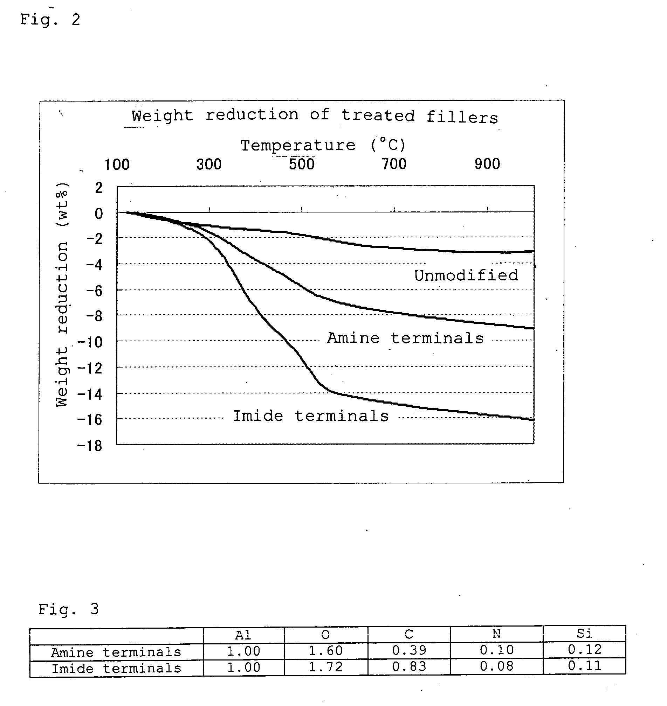

After adding 30 ml of tetralin, 10 ml of toluene and 5 g of the aforementioned γ-alumina filler into a flask, the mixture was heated to reflux for 2 hours to remove the low boiling point components, after which 23 ml of 3-aminopropyltrimethoxysilane was added and the mixture was heated to reflux for 4 hours and then filtered to obtain a surface-coated γ-alumina filler. The results of IR/TGA and ESCA of the obtained filler are shown in Figs. 1 and 2 and Fig. 3. ESCA yielded a result of Si/Al = 0.10.

To the γ-alumina filler obtained in this manner, having a silane coupling agent with terminal amino groups, there were added 80 ml of THF, 80 ml of toluene and 8 g of phthalic anhydride were added, and heat reaction was conducted. The reaction product was filtered, washed and dried to obtain a γ-alumina filler having surface imide groups. After adding 150 ml of ethylene glycol, 23 g of zirconia beads with a diameter of 1 mm and 1.5 g of the aforementioned surface-coated γ-alumina filler into a ball mill, the mixture was dispersed for 6 hours to obtain a 1 wt% filler-containing ethylene glycol dispersion. The results of IR/TGA and ESCA of the obtained filler are shown in Figs. 1 and 2 and Fig. 3.

Next, 201 g of dimethyl 2,6-naphthalenedicarboxylate and 113 g of ethylene glycol were reacted while gradually heating from 150°C to 240°C using 0.073 g of calcium acetate as a transesterification reaction catalyst, for transesterification, after which 0.058 g of trimethyl phosphate was added to inactivate the transesterification catalyst.

To 39 g of the diethylene glycol ester of naphthalenedicarboxylic acid obtained in this manner, there were added 30 g of the aforementioned filler-containing ethylene glycol dispersion and 0.01 g of antimony oxide. This was followed by heating to 290°C and polycondensation reaction under a high vacuum of no greater than 1 mmHg to obtain a polyethylene naphthalate composition with a reduced viscosity of 0.50 (dL/g). The obtained composition was amorphous, with a Tg of 119.2°C, a crystallization temperature peak of 215.5°C, a melting point after crystallization of 265.0°C and a softening point of 122°C.

### Comparative Example 1

A polyester was obtained by the same procedure as in Example 1, except that no γ-alumina filler was used. The sample had a reduced viscosity of 0.83 (dL/g). The obtained composition was amorphous, with a Tg of 118.1°C, a crystallization temperature peak of 217.5°C, a melting point after crystallization of 267.2°C and a softening point of 111°C.

### Example 3

After adding 150 ml of ethylene glycol, 23 g of zirconia beads with a diameter of 1 mm and 1.5 g of the aforementioned surface-coated γ-alumina filler into a ball mill, the mixture was dispersed for 6 hours to obtain a 1 wt% filler-containing ethylene glycol dispersion.

Next, 70 ml of the aforementioned dispersion and 27 ml of 1-butanol were added to a flask and the mixture was heated to reflux for 9 hours for azeotropic removal of the water. After then adding 0.7 g of 3-aminopropyltrimethoxysilane thereto and heating at 80°C for 2.5 hours, at 180°C for 6 hours and at 200°C for 1.5 hours, the mixture was filtered to obtain a surface-coated γ-alumina filler.

To the γ-alumina filler obtained in this manner, having a silane coupling agent with terminal amino groups, there was added 0.6 g of phthalic anhydride, and after reaction at 100°C for 4 hours, the reaction product was cooled and 0.03 g of pyridine was added. The mixture was further reacted at 100°C for 1 hour and at 200°C for 2 hours to obtain a fibrous γ-alumina filler having surface imide groups. ESCA yielded a result of Si/Al = 0.07.

Next, 201 g of dimethyl 2,6-naphthalenedicarboxylate and 113 g of ethylene glycol were reacted while gradually heating from 150°C to 240°C using 0.073 g of calcium acetate as a transesterification reaction catalyst, for transesterification, after which 0.058 g of trimethyl phosphate was added to inactivate the transesterification catalyst.

To 39 g of the diethylene glycol ester of naphthalenedicarboxylic acid obtained in this manner, there were added 30 g of the aforementioned filler-containing ethylene glycol dispersion (1 wt% filler) and 0.01 g of antimony oxide. This was followed by gradual heating to 290°C and polycondensation reaction under a high vacuum of no greater than 1 mmHg to obtain a polyethylene naphthalate composition with a reduced viscosity of 0.71 (dL/g). The obtained composition was amorphous, with a Tg of 116.8°C, a crystallization temperature peak of 216.0°C and a melting point after crystallization of 257.4°C. The softening point as measured by TMA was 118°C.

### Example 4

The aforementioned γ-alumina filler was added to 3 L of ion-exchanged water and then treated for 6 hours with a thin-film revolving high-speed mixer to obtain a 5 wt% filler-containing aqueous dispersion. After adding 1 Kg of ethylene glycol to 1 L of this filler-containing aqueous dispersion, the mixture was heated to exchange the solvent from water to ethylene glycol, thereby obtaining a 5 wt% γ-alumina filler-containing ethylene glycol dispersion.

A 30 g portion of the 5 wt% γ-alumina filler-containing ethylene glycol dispersion obtained in this manner was then added to 33 g of a diethylene glycol ester of terephthalic acid and 0.01 g of antimony oxide. This was followed by heating to 280°C and polycondensation reaction under a high vacuum of no greater than 1 mmHg to obtain a polyethylene terephthalate composition with a reduced viscosity of 0.29 (dL/g).

The obtained composition was amorphous, with a Tg of 68°C, a crystallization temperature peak of 117°C and a melting point after crystallization of 250°C.

### Example 5

The polyethylene terephthalate composition obtained in Example 4 was dried and a spinneret with a 0.3 mm diameter circular spinning hole was used for melt spinning at 270°C. This was followed by stretching at a stretching factor of 4.0 at 100°C to obtain a 3.3 denier fiber.

## Claims

1. A thermoplastic resin composition comprising 100 parts by weight of a thermoplastic resin (A) and 0.01-10 parts by weight of a fibrous aluminum oxide filler (B) composed of a compound represented by the following formula (I):
AlₓO_{y}H_{z} (I)
(where x, y and z are numbers of 0-3, and x=(2y-z)/3 is satisfied),
wherein the primary particles of the fibrous aluminum oxide filler have a mean fiber length of 10-1000 nm, a mean fiber diameter of 0.5-7 nm and a mean aspect ratio of 2000-5.

2. A thermoplastic resin composition according to claim 1, **characterized in that** the primary particles of the fibrous aluminum oxide filler (B) have a mean fiber length of 30-300 nm.

3. A thermoplastic resin composition according to claim 1, **characterized in that** the fibrous aluminum oxide filler (B) has a mean aspect ratio of 600-5.

4. A thermoplastic resin composition according to claim 1, **characterized in that** the thermoplastic resin (A) is at least one type of resin selected from the group consisting of polyesters, polycarbonates, polyether ketones, polyethers, polyimides, polyamides and polyphenylene sulfides.

5. A thermoplastic resin composition according to claim 1, wherein the thermoplastic resin (A) is a polyester.

6. A thermoplastic resin composition according to claim 1, wherein the thermoplastic resin (A) is a polycarbonate.

7. A thermoplastic resin composition according to claim 1, wherein the fibrous aluminum oxide filler (B) is a fibrous aluminum oxide filler which has been surface coated with a silane coupling agent.

8. A thermoplastic resin composition according to claim 7, **characterized in that** the silane coupling agent is a compound represented by the following formula (II):
(R¹)ₙ-Si-X₍₄₋ₙ₎ (II)
(wherein R¹ is a C1-60 aliphatic or C1-60 aromatic hydrocarbon, n is 1-3 and X is a halogen or C1-6 alkoxy),
and the Si and Al abundance ratio (Si/Al) of the fibrous aluminum oxide filler (B) after surface treatment with the silane coupling agent is 0.001-1.00, in terms of the surface element proportion according to ESCA measurement with MgKa rays at a photoelectron take-off angle = 15°.

9. A process for production of a thermoplastic resin composition according to claim 1, **characterized by** adding a fibrous aluminum oxide filler after its dispersion in a solvent, at any desired stage of the thermoplastic resin polymerization process or during melting of the thermoplastic resin.

10. A molded article comprising a thermoplastic resin composition according to claim 1.

11. A molded article according to claim 10, which is fiber.
